# EUROPEAN PATENT SPECIFICATION

(11) **EP 0 376 242 B1**
(45) Date of publication and mention of the grant of the patent: **17.08.1994**
(21) Application number: 89123933.7
(22) Date of filing: 27.12.1989
(51) Int. Cl.: G11B 15/665, G11B 15/66

(54) **Tape-loading mechanism for use in magnetic recording/reproducing apparatus**
Kassettenlademechanismus für ein Aufnahme-/Wiedergabegerät
Mécanisme de chargement de cassette utilisé dans un appareil d'enregistrement/reproduction

(30) Priority: 28.12.1988 JP 333589/88
(43) Date of publication of application: 04.07.1990
(73) Proprietor: KABUSHIKI KAISHA TOSHIBA, Kawasaki-shi, Kanagawa-ken 210 (JP)
(72) Inventor: Tsuchiya, Yuzo Intellectual Property Division, Minato-ku Tokyo 105 (JP); Tanaka, Toshiaki Intellectual Property Division, Minato-ku Tokyo 105 (JP)
(74) Representative: Henkel, Feiler, Hänzel & Partner

(56) References cited:
- EP-A- 0 194 420
- EP-A- 0 227 954
- US-A- 4 138 699

## Description

The present invention relates generally to a magnetic recording/reproducing apparatus, such as a video tape recorder (VTR), and more particularly to a tape-loading mechanism for loading a tape contained in a tape cassette.

As is well known, a helical scan VTR is provided with both a front loading mechanism and a tape-loading mechanism. When a video tape cassette containing a video tape is horizontally inserted into the cassette insertion port formed in the front face of the VTR, the front loading mechanism receives and draws the cassette inside, and then lowers the cassette until it comes to the predetermined cassette-loading position. Thereafter, the tape-loading mechanism pulls the tape out of the cassette placed at the cassette-loading position and guides the tape such that it is in contact with about half of the circumference of the rotating cylinder. After the tape-loading mechanism sets the tape along the tape feed path in this way, various operation modes, such as recording, play, freeze (i.e., still image reproduction), slow play, fast-forward play, fast-rewind play, fast forward, and fast rewind, are selectively established with a mode-establishing mechanism and its associated circuits. If an eject key is operated, the tape-loading mechanism draws the tape back into the cassette, and the front loading mechanism returns the cassette from the cassette-loading position to the cassette insertion port.

With respect to this type of magnetic recording/reproducing apparatus, it is demanded that the operation of each mechanism be reliably controlled without complicating the construction and that the operation of the entire apparatus be controlled with high accuracy.

A tape-loading mechanism, which pulls a tape out of a tape cassette by means of a pair of tape-pulling members and brings the tape into contact with a helical scan type cylinder, may be among the mechanisms whose operations should be reliably controlled without complicating the construction. The tape-loading mechanism is required to provide an accurate tape feed path when it has completed the tape loading.

Each tape-pulling member of the tape-loading mechanism has a slanted post and a guide roller, and by means of these the tape-loading mechanism executes the tape loading. With this construction, the tape may slacken and disengage from the tape-winding portions of the guide rollers when the tape loading has been completed. Even if the tape slackens, it is applied with tension and brought into engagement with the tape-winding portions when the driving of the tape is started. At this time, however, the tape strongly contacts the flanges formed at the respective ends of the tape-winding portions, whereby the tape may be damaged. The tape may also be damaged if it is wound around the flanges, not around the tape-winding portions.

An automatic tape loading type recording and reproducing apparatus with the features of the preamble of claim 1 is described in US-A-4 138 699. The tape loading mechanism of this apparatus for bringing a tape into contact with a drum carrying the heads for recording or reproducing comprises a pair of tape pulling members which depending on a set function of the apparatus move along guides in predetermined directions for pulling the tape out of a cassette and guiding it on a predetermined tape travel path or for returning the tape into the cassette. Each of the movable tape pulling members comprises a tape guide roller and holding members are provided at the guide end positions for holding the respective tape pulling members at these positions. However, in this known mechanism no means are provided for preventing a damage of the tape when the latter slackens and is disengaged from the tape guide rollers.

Accordingly, an object of the present invention is to provide a tape-loading mechanism which is adapted for use in a magnetic recording/reproducing apparatus and which is simple in construction and is capable of executing reliable tape loading without causing any tape damage.

This object is achieved by a tape-loading mechanism which comprises the features defined in claim 1.

Preferred embodiments are described in the subclaims.

This invention can be more fully understood from the following detailed description when taken in conjunction with the accompanying drawings, in which:
Figs. 1A-1C are top, side and bottom views, respectively, of a VTR which incorporates the tape-loading mechanism according to the first embodiment of the present invention;
Fig. 2 is a sectional view of a clutch gear mechanism;
Fig. 3 is a perspective view of a switching mechanism;
Figs. 4A and 4B are top and bottom views, respectively, illustrating both a pulley and a vertically-movable gear;
Figs. 5A and 5B are top and bottom views, respectively, illustrating a tape-loading mechanism;
Fig. 6 is a block circuit diagram of the electric circuit of the VTR;
Fig. 7A is a front view of a tape control portion employed in the first embodiment;
Figs. 7B and 7C are plan views of the tape control portions employed in the first embodiment;
Figs. 8A and 8B are front and plan views, respectively, of a tape control portion employed in the second embodiment of the present invention; and
Fig. 9 is a front view of a tape control portion employed in the third embodiment of the present invention.

Embodiments of the present invention will now be described, with reference to the accompanying drawings.

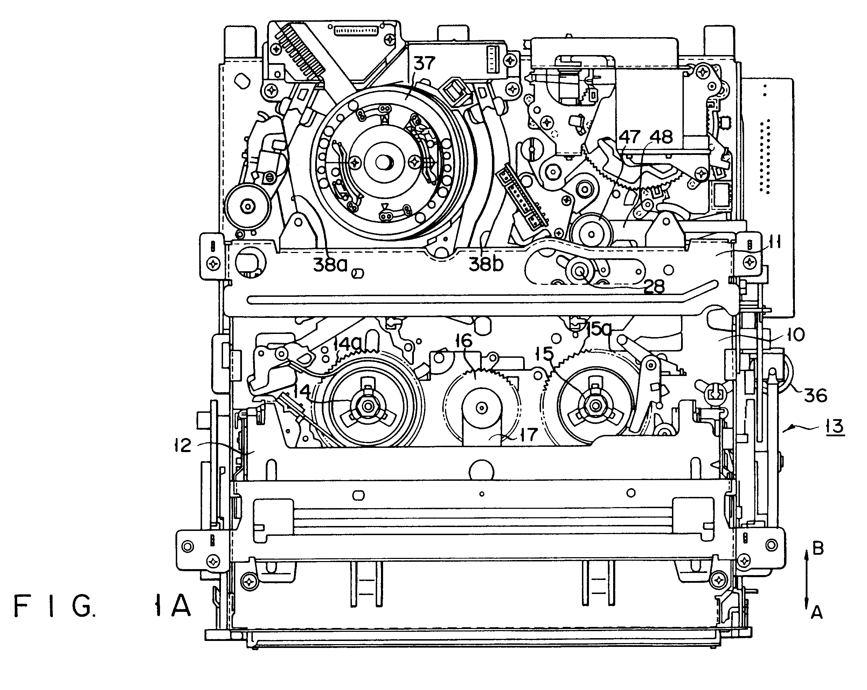

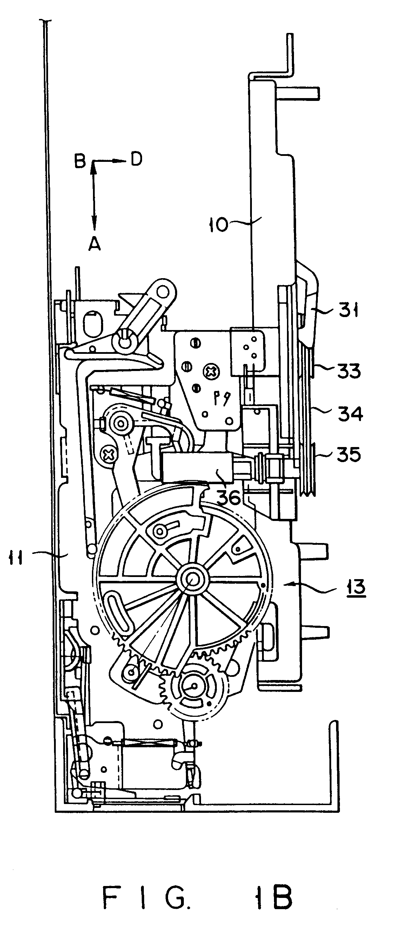

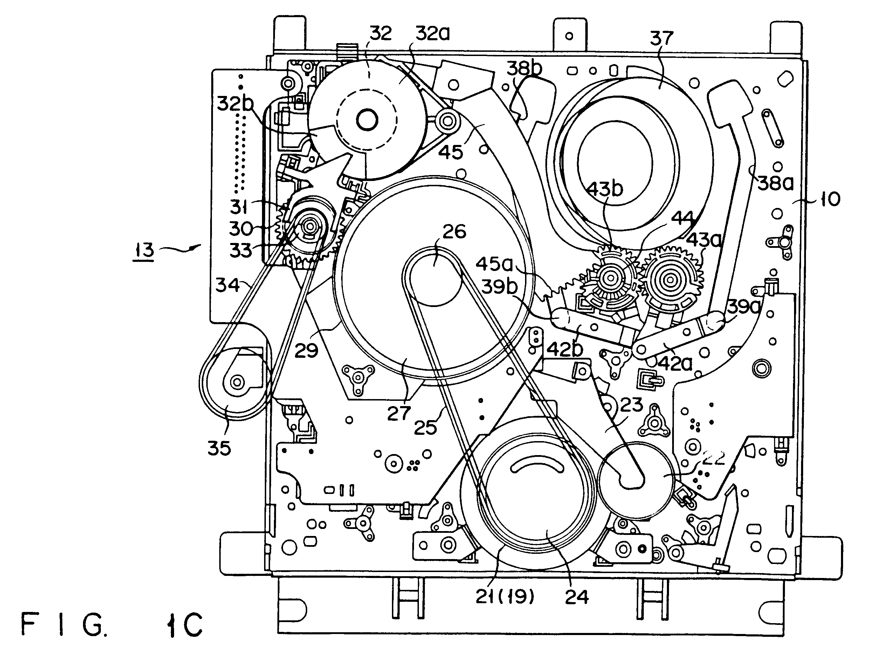

Figs. 1A, 1B and 1C are top, side and bottom views, respectively, of a tape-loading mechanism employed in the magnetic recording/reproducing apparatus according to the first embodiment of the present invention. Referring to the Figures, frame member 11 is coupled to one end of main chassis 10. Cassette holder 12 is supported by frame member 11 such that it is movable in the directions indicated by arrows A, B and D (the direction indicated by arrow D is perpendicular to the directions indicated by arrows A and B). Cassette holder 12 is adapted to receive cassette C (which is not shown in Figs. 1A, 1B and 1C, for simplicity) when it is located at the cassette insertion port. In response to the insertion of cassette C into cassette holder 12, front loading mechanism 13 is automatically driven. This front loading mechanism moves cassette holder 12 in direction B, together with cassette C inserted therein, until cassette holder 12 reaches a predetermined position. Then, front loading mechanism 13 moves cassette holder 12 in direction D. As a result, cassette C is fitted on supply reel bases 14 and 15, which are parts of a tape-driving mechanism.

Gears 14a and 15a are coupled to reel bases 14 and 15, respectively. Driving gear 16 constituting part of the tape-driving mechanism is located between gears 14a and 15a. This driving gear 16 is supported by one end of swing member 17.

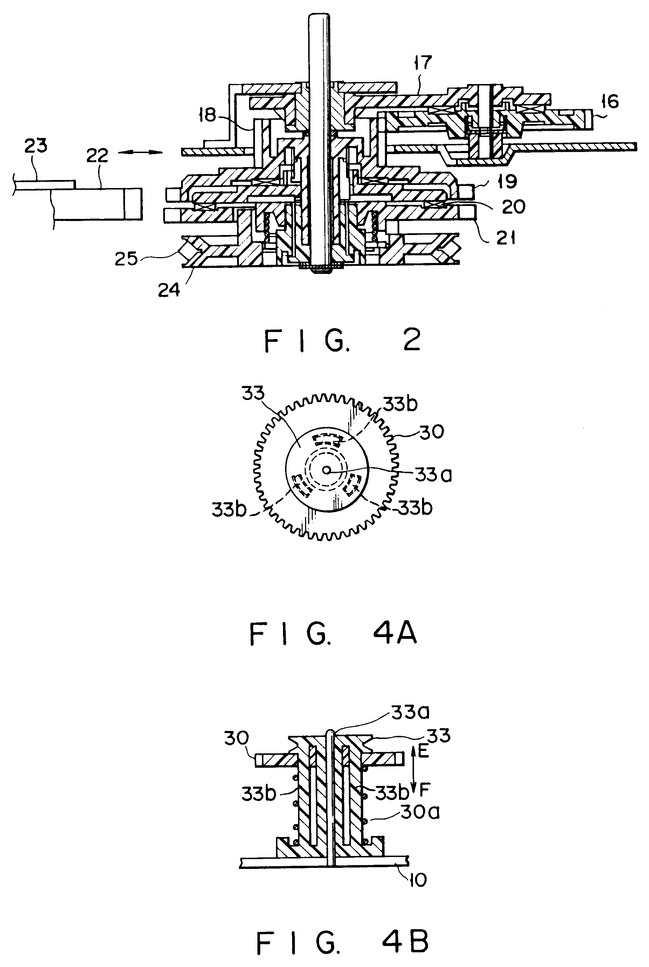

As is shown in Fig. 2, gear 18, which is in mesh with driving gear 16, is attached to the other end of swing member 17. First clutch gear 19, which is part of a clutch gear mechanism, is arranged coaxial with gear 18. Second clutch gear 21, which is also part of the clutch gear mechanism, is stacked upon first clutch gear 19, with friction member 20 interposed therebetween. Clutch-switching gear 22 is arranged in such a manner as to face both gears 19 and 21. Clutch-switching gear 22 can be brought into contact with the first and second clutch gears 19 and 21, and can be moved away from them. Clutch-switching gear 22 is swung by change-over slider 23 (which interlocks with an operation mode-switching mechanism), such that it is selectively brought into mesh with both clutch gears 19 and 21. Pulley 24 is arranged coaxial with second clutch gear 21, and driving belt 25 is wound around pulley 24.

As is shown in Fig. 1C, driving belt 25 is wound around driving pulley 26. This driving pulley 26 is fitted on the rotating shaft of capstan motor 27. Therefore, the driving force of capstan motor 27 is transmitted first to pulley 24 via driving belt 25, and then to second clutch gear 21. Capstan shaft 28 is arranged coaxial with capstan motor 27.

As is shown in Fig. 3, driving gear 29 is fitted around the periphery of the rotating member of capstan motor 27. Vertically-movable gear 30 is arranged such that it faces driving gear 29. First end 31a of vertically-swingable switch lever 31 is in contact with the upper side of vertically-movable gear 30. Second end 31b of the switch lever 31 engageable with one side of first mode-switching cam 32a, which is one of the axially-arranged mode-switching cams of the operation mode-switching mechanism.

First mode-switching cam 32a has step portion 32b which is in the form of a circular arc having predetermined size. Slanted portion 32c is formed in that end of step portion 32b which is located downstream with reference to the rotating direction of first mode-switching cam 32a. Slanted portion 32c is formed in such a manner that step portion 32b is smoothly connected to surface 32d of first mode-switching cam 32a.

With this construction, second end 31b of switch lever 31 engages with one of step portion 32b, slanted portion 32c and surface 32d of first mode-switching cam 32a in accordance with the rotation of this cam 32a. As a result of this engagement, first end 31a of switch lever 31 swings in the axial direction of vertically-movable gear 30, with rotatable shaft 31c as a center of swing.

As is shown in Figs. 4A and 4B, vertically-movable gear 30 is coaxial with pulley 33, and this pulley 33 is coupled to main chassis 10 such that it is rotatable around shaft 33a. Vertically-movable gear 30 is located around pulley 33 and is urged toward pulley 33 in the axial direction of shaft 33a by spring 30a. The rotation of vertically-movable gear 30 is transmitted to pulley 33 through stop members 33b. That is, vertically-movable gear 30 and pulley 33 are rotatable in the same direction.

Driving belt 34 is wound around both pulley 33 and pulley 35. As is shown in Fig. 1C, pulley 35 is coaxial with worm 36 of front loading mechanism 13.

At the time of loading tape cassette C, second end 31b of switch lever 31 engages with step portion 32b, due to the rotation of first mode-switching cam 32a. Therefore, first end 31a of switch lever 31 is separated from vertically-movable gear 30. As a result, vertically-movable gear 30 is raised (in the direction E) by the urging force of spring 30a and brought into mesh with driving gear 29. Thus, the rotation of capstan motor 27 is transmitted to front driving mechanism 13 through vertically-movable gear 30, pulley 33, driving belt 34, pulley 35 and worm 36, whereby front driving mechanism 13 performs the loading of cassette holder 12.

When the loading of cassette C is completed, first mode-switching cam 32a is rotated, and second end 31b of switch lever 31 engages with surface 32d after sliding along slanted portion 32c. Therefore, first end 31a of switch lever 31 contacts vertically-movable gear 30 and pushes this gear downward. As a result, vertically-movable gear 30 is moved downward in the direction F in spite of the urging force of spring 30a. Thus, the rotation of pulley 33 is stopped, and the loading of cassette holder 12 is stopped, accordingly.

Loading motor 32 is designed to drive not only first mode-switching cam 32a mentioned above but also the other mode-switching cams.

As is shown in Fig. 1A, helical scan type cylinder 37 having magnetic heads (not shown) is rotatably coupled to main chassis 10 mentioned above. Around this cylinder 37, first and second guide holes 38a and 38b (which are parts of a tape-loading mechanism) are provided such that the two guide holes correspond in location to the tape inlet and outlet sides, respectively.

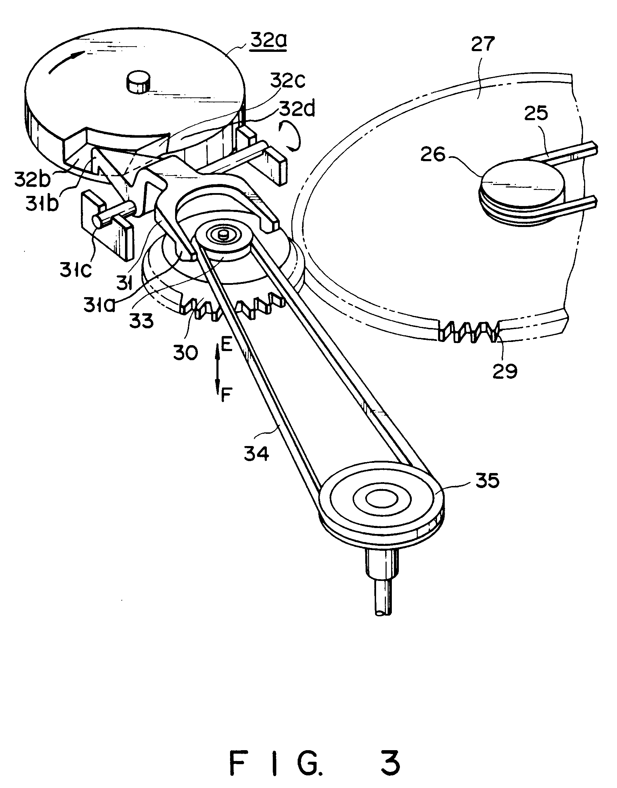

As is shown in Fig. 5A, first and second tape-pulling members 39a and 39b are fitted in first and second guide holes 38a and 38b, respectively, such that they are movable within the guide holes. Slanted post 40a substantially parallel to cylinder 37 and guide roller 41a substantially perpendicular to main chassis 10 are provided for first tape-pulling member 39a such that they are located side by side with reference to each other. Likewise, slanted post 40b substantially parallel to cylinder 37 and guide roller 41b substantially perpendicular to main chassis 10 are provided for second tape-pulling member 39b such that they are located side by side with reference to each other.

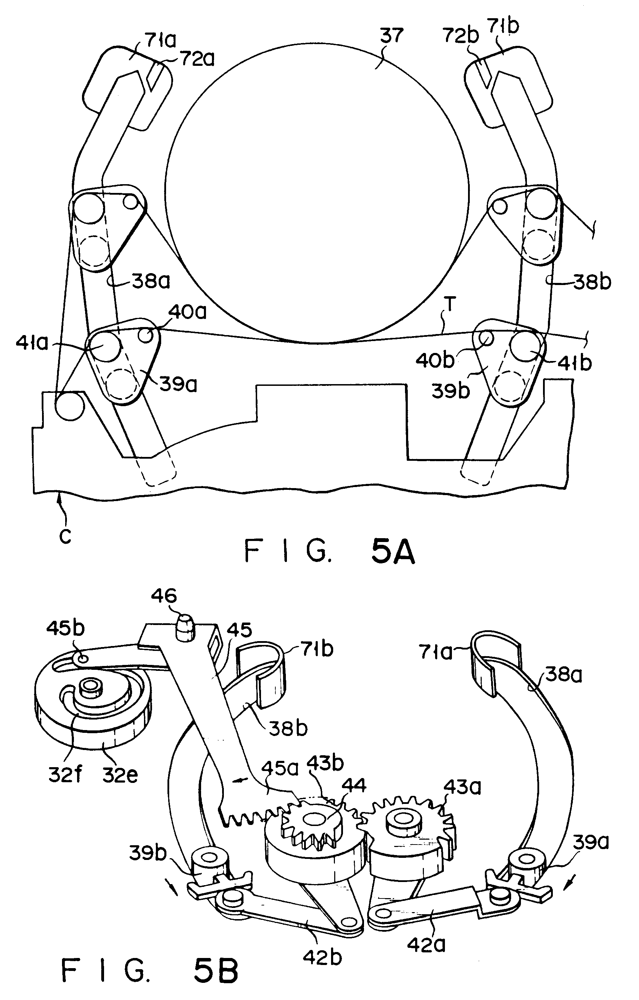

As is shown in Fig. 5B, the one-end portions of first and second links 42a and 42b are coupled to the proximal ends of first and second tape-pulling members 39a and 39b, respectively. The other-end portions of first and second links 42a and 42b are supported by first and second driving gears 43a and 43b, respectively, which are in mesh with each other. Half-gear 44 is arranged coaxial with second driving gear 43b. Sectorial gear 45a formed at one end of driving lever 45 is in mesh with half-gear 44. An intermediate point of driving lever 45 is swingably supported by main chassis 10 by means of shaft 46. Pin 45b located at the other end of driving lever 45 engages with cam groove 32f formed in second mode-switching cam 32e, and this cam 32e is rotated within a predetermined angular range by loading motor 32. Therefore, driving lever 45 is driven by the movement of second mode-switching cam 32e, and transmits the driving force to first and second tape-pulling members 39a and 39b, through half-gear 44, first and second driving gears 43a and 43b, and first and second links 42a and 42b, thereby performing tape loading.

As is shown in Fig. 1A, pinch roller 47, which is part of the tape-driving mechanism, is arranged on main chassis 10 such that it is located in the neighborhood of capstan shaft 28 mentioned above. Pinch roller 47 is swingably supported by one end of pinch lever 48. Pinch lever 48 is swung in association with the above-mentioned mode-switching cams by a linking mechanism (not shown). As a result of the swing of pinch lever 48, pinch roller 47 supported at one end of lever 48 is pressed against capstan shaft 28, with tape T interposed.

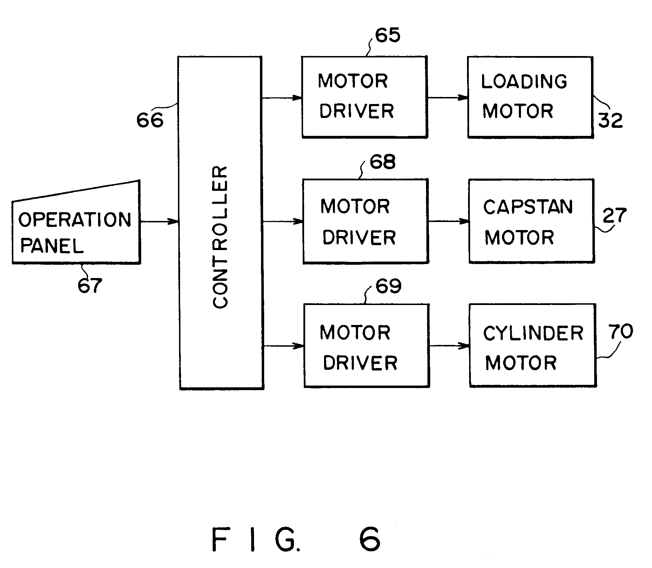

First and second mode-switching cams 32a and 32e mentioned above are coaxial with the other mode-switching cams (not shown). All these mode-switching cams are rotated within the same angular range by loading motor 32, and their angles of rotation are determined in accordance with the operation modes of the VTR. As is shown in Fig. 6, loading motor 32 is driven by motor driver 65 under the control of controller 66. In accordance with the user's operation of control panel 67, controller 66 determines an operation mode of the VTR. Controller 66 causes the mode-switching cams to be rotated by the angle corresponding to the determined operation mode. Further, controller 66 controls motor driver 68 in accordance with the determined operation mode, to thereby drive capstan motor 27. The torque of capstan motor 27 is selectively transmitted to capstan shaft 28, reel base 14 located on the tape supply side, reel base 15 located on the tape rewind side, etc. Still further, controller 66 controls motor driver 69 in accordance with the determined operation mode, to thereby drive cylinder motor 70 to rotate cylinder 37.

A description will now be given of a tape-loading mechanism of the present invention applied to the VTR of the above construction. As is shown in Figs. 5A and 5B, the tape-loading mechanism of the first embodiment of the invention has holding members 71a and 71b, which are normally referred to as catchers, corresponding to first and second tape-pulling members 39a and 39b. Holding members 71a and 71b are provided at the loading completion position of first and second guide holes 38a and 38b of main chassis 10. Tape control portions 72a and 72b extending in such a manner as to intersect the tape path are formed on the upper faces of holding members 71a and 71b, respectively.

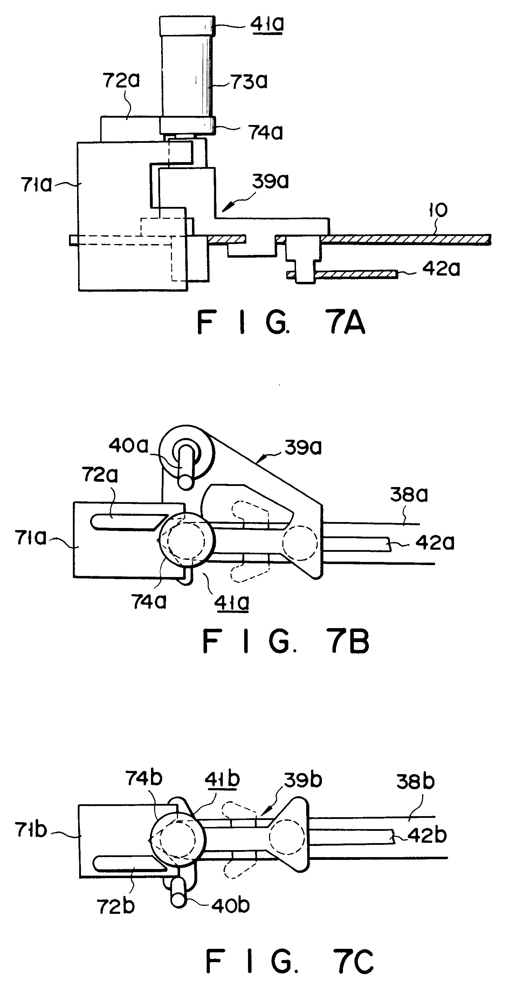

The holding members 71a, 71b and the tape control portions 72a, 72b have the constructions shown in Figs. 7A to 7C. As is shown in these Figures, tape control portions 72a and 72b are provided in correspondence to one side facing cylinder 37 on holding members 71a and 71b. The heights of tape control portions 72a and 72b as measured from holding members 71a and 71b are determined such that their upper surfaces are substantially at the the same level as, or slightly lower than, flanges 74a and 74b formed at the lower end of tape-winding portions 73a and 73b of guide rollers 41a and 41b.

With this construction, even if tape T slackens when it is pulled out of tape cassette C and set in engagement with both the slanted posts 40a, 40b and guide rollers 41a, 41b of the first and second tape-pulling members 39a, 39b, the lower edge of tape T is controlled by tape control portions 72a and 72b such that its desirable posture is maintained. When tape T is tensed next, it is guided to tape-winding portions 73a and 73b of guide rollers 41a and 41b. Since tape control portions 72a and 72b are substantially at the same level of lower flanges 74a and 74b of guide rollers 41a and 41b, tape T is not damaged when it is guided from tape control portions 72a and 72b to tape-winding portions 73a and 73b. In this manner, the tape-loading mechanism of the above construction prevents tape T from being damaged even if tape T slackens. Thus, it is possible to perform tape loading in a reliable manner.

In the tape-loading mechanism mentioned above, tape control portions 72a and 72b are located at downstream points of guide rollers 41a and 41b with reference to the tape feed direction. In other words, tape control portions 72a and 72b are located closer to slanted posts 40a and 40b than guide rollers 41a and 41b, respectively. Needless to say, however, tape control portions 72a and 72b may be provided at upstream points of guide rollers 41a and 41b. Further, they may be provided at both upstream and downstream points of guide rollers 41a and 41b.

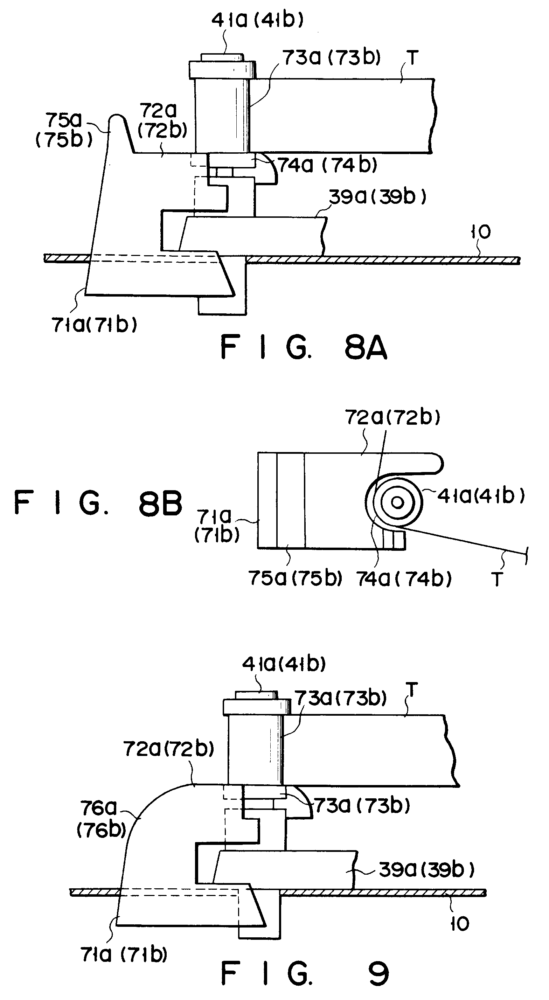

Figs. 8A and 8B are views of tape control portions 72a and 72b employed in the tape-loading mechanism of the second embodiment of the present invention. Since tape control portions 72a and 72b differ from each other merely in their positions relative to respective guide rollers 41a and 41b, only the construction including first tape-pulling member 39a is shown in Figs. 8A and 8B, for simplicity. As for the construction including second tape-pulling member 39b, the corresponding parts are denoted by the reference numerals enclosed within the parentheses.

Referring to Figs. 8A and 8B, tape control portion 72a corresponding to first tape-pulling member 39a is integral with holding member 71a. To be more precise, tape control portion 72a is constituted by the upper surface of holding member 71a. In the first embodiment mentioned above, tape control section 72a is located only on one side of guide roller 41a, whereas in the second embodiment, it is constituted by the entire upper surface of holding member 71a and is located on both sides of guide roller 41a. At a position located away from guide roller 41a by a predetermined distance, projection 75a used for guiding tape T is formed on the surface of holding member 71a, i.e., on tape control portion 72a.

Holding member 71b corresponding to second tape-pulling member 39b has tape control portion 72b and projection 75b, which have similar constructions to tape control portion 72a and projection 75a mentioned above.

With this construction, even if tape T slackens when it is pulled out of tape cassette C and set in engagement with both the slanted posts 40a, 40b and guide rollers 41a, 41b of the first and second tape-pulling members 39a, 39b, the lower edge of tape T is controlled by tape control portions 72a and 72b such that its desirable posture is maintained. Even if tape T slackens much, the slack of tape T contacts projections 75a and 75b and is guided thereby, while being controlled by tape control portions 72a and 72b. Therefore, the slack of tape T does not contact structural components (not shown) located in the neighborhood of projections 75a and 75b. Thus, tape T is prevented from being damaged by such structural components. When tape T is tensed next, it is guided to tape-winding portions 73a and 73b of guide rollers 41a and 41b. Since tape control portions 72a and 72b are substantially at the same level of lower flanges 74a and 74b of guide rollers 41a and 41b, tape T is not damaged by flanges 74a and 74b when it is guided from tape control portions 72a and 72b to tape-winding portions 73a and 73b. In this manner, the tape-loading mechanism of the above construction prevents tape T from being damaged even if tape T slackens. Thus, it is possible to perform tape loading in a reliable manner.

Fig. 9 is a view of tape control portions 72a and 72b employed in the tape-loading mechanism of the third embodiment of the present invention. Since tape control portions 72a and 72b differ from each other merely in their positions relative to respective guide rollers 41a and 41b, only the construction including first tape-pulling member 39a is shown in Figs. 8A and 8B, for simplicity. As for the construction including second tape-pulling member 39b, the corresponding parts are denoted by the reference numerals enclosed within the parentheses.

Referring to Fig. 9, tape control portion 72a corresponding to first tape-pulling member 39a is integral with holding member 71a. To be more precise, tape control portion 72a is constituted by the upper surface of holding member 71a. Slanted portion 76a, which is slanted at a predetermined angle and serves to guide slack of tape T, is formed at that end of tape control portion 72a (i.e., holding member 71a ) which is located opposite to guide roller 41a. Holding member 71b corresponding to second tape-pulling member 39b has tape control section 72b and slanted portion 76b similar to those mentioned above.

With this construction, even if tape T slackens when it is pulled out of tape cassette C and set in engagement with both the slanted posts 40a, 40b and guide rollers 41a, 41b of the first and second tape-pulling members 39a, 39b, the lower edge of tape T is controlled by tape control portions 72a and 72b such that its desirable posture is maintained. Even if tape T slackens much, the slack of tape T is guided along slanted portions 76a and 76b, while being controlled by tape control portions 72a and 72b. Therefore, the slack of tape T is does not contact structural components (not shown) located in the neighborhood of slanted portions 72a and 72b. Thus, tape T is prevented from being damaged by such structural components. When tape T is tensed next, it is guided to tape-winding portions 73a and 73b of guide rollers 41a and 41b. Since tape control portions 72a and 72b are substantially at the same level of lower flanges 74a and 74b of guide rollers 41a and 41b, tape T is not damaged by flanges 74a and 74b when it is guided from tape control portions 72a and 72b to tape-winding portions 73a and 73b. In this manner, the tape-loading mechanism of the above construction prevents tape T from being damaged even if tape T slackens. Thus, it is possible to perform tape loading in a reliable manner.

According to the present invention, if tape T pulled out by first and second tape-pulling members 39a and 39b slackens, the slack of tape T is controlled by tape control portions 72a and 72b, as mentioned above. When tape T is tensed thereafter, it is reliably wound around tape-winding portions 73a and 73b of guide rollers 41a and 41b. Therefore, tape T is prevented from being damaged even if it slackens. According to the present invention, moreover, projections 75a and 75b (or slanted portions 76a and 76b) are provided for holding members 71a and 71b, respectively, so as to guide tape T. With this construction, even if tape T pulled out of tape cassette C slackens much and is located greatly away from tape-winding portions 73a and 73b of guide rollers 41a and 41b, the slack of tape T is guided by projections 75a and 75b (or slanted portions 76a and 76b) and is therefore prevented from undesirably contacting the neighboring structural components. Accordingly, tape T is prevented from being damaged even if it slackens much.

The above embodiments were described, referring to the case where the present invention is applied to a VTR. However, the present invention is not limited to this. It can be applied to various types of magnetic recording/reproducing apparatuses, and similar advantages to those mentioned above can be expected in such application as well.

## Claims

1. A tape-loading mechanism for pulling a tape (T) out of a tape cassette (C) and bringing the tape (T) into contact with a cylinder (37) used for recording/reproducing information on the tape (T), the mechanism comprising:
a first tape-pulling member (39a), provided on a tape inlet side of the cylinder (37) and having a first slanted post (40a) and a first guide roller (41a) thereon, for pulling the tape (T) out of the tape cassette (C), the first slanted post (40a) and the first guide roller (41a) contacting the tape (T), the first guide roller (41a) including a first tape-winding portion (73a), the tape (T) passing around the first tape-winding portion (73a) when the tape (T) contacts the first guide roller (41a);
first guide means (38a), provided on the tape inlet side of the cylinder (37), for guiding the first tape-pulling member (39a) between first and second positions, the first slanted post (40a) and the first guide roller (41a) of the first tape pulling member (39a) initially contacting the tape (T) contained in the tape cassette (C) at the first position, and the first tape-pulling member (39a) bringing the tape (T) pulled out of the tape cassette (C) into contact with the cylinder (37) at the second position;
a first holding member (71a) for holding, at the second position, the first tape-pulling member (39a) guided from the first position by the first guide means (38a);
a second tape-pulling member (39b), provided on a tape outlet side of the cylinder (37) and having a second slanted post (40b) and a second guide roller (41b) thereon, for pulling the tape (T) out of the tape cassette (C), the second slanted post (40b) and the second guide roller (41b) contacting the tape (T), the second guide roller (41b) including a second tape-winding portion (73b), the tape (T) passing around the second tape-winding portion (73b) when the tape (T) contacts the second guide roller (41b);
second guide means (38b), provided on the tape outlet side of the cylinder (37), for guiding the second tape-pulling member (39b) between third and fourth positions, the second slanted post (40b) and the second guide roller (41b) of the second tape-pulling member (39b) initially contacting the tape (T) contained in the tape cassette (C) at the third position, and the second tape-pulling member (39b) bringing the tape (T) pulled out of the tape cassette (C) into contact with the cylinder (37) at the fourth position; and
a second holding member (71b) for holding, at the fourth position, the second tape-pulling member (39b) guided from the third position by the second guide means (38b), characterized by further comprising:
first damage preventing means (72a), formed on the first holding member (71a) such that the first damage preventing means (72a) is positioned relative to at least one of a tape inlet and tape outlet side of the first guide roller (41a) of the first tape-pulling member (39a), for preventing the tape (T) from being damaged when the tape (T) falls off of the first guide roller (41a) in a slackened state, the first damage preventing means (72a) supporting only a lower edge of the tape (T) at a level corresponding to a lower end of the first tape-winding portion (73a) of the first guide roller (41a), leaving the other edge and surfaces of the tape (T) unsupported, so that should the tape (T) in a slackened state leave the first guide roller (41a), the lower edge of the slackened tape (T) will rest upon the first damage preventing means (72a); and
second damage preventing means (72b), formed on the second holding member (71b) such that the second damage preventing means (72b) is positioned relative to at least one of a tape inlet and tape outlet side of the second guide roller (41b) of the second tape-pulling member (39b), for preventing the tape (T) from being damaged when the tape (T) falls off of the second guide roller (41b) in a slackened state, the second damage preventing means (72b) supporting only the lower edge of the tape (T) at a level corresponding to a lower end of the second tape-winding portion (73b) of the second guide roller (41b), leaving the other edge and surfaces of the tape (T) unsupported, so that should the tape (T) in a slackened state leave the second guide roller (41b), the lower edge of the slackened tape (T) will rest upon the second damage preventing means (72b).

2. The tape-loading mechanism according to claim 1, characterized in that:
said guide rollers (41a, 41b) include flanges (74a, 74b) which define lower ends of the tape-winding portions (73a, 73b); and
said first and second damage preventing means (72a, 72b) are substantially at the same level as the flanges (74a, 74b).

3. The tape-loading mechanism according to claim 1, characterized in that:
said guide rollers (41a, 41b) include flanges (74a, 74b) which define lower ends of the tape-winding portions (73a, 73b); and
said first and second damage preventing means (72a, 72b) are at a slightly lower level than that of the flanges (74a, 74b).

4. The tape-loading mechanism according to any one of claims 1 to 3, characterized in that said first and second damage preventing means (72a, 72b) have tip ends extending in such a manner as to intersect a tape path.

5. The tape-loading mechanism according to any one of claims 1 to 3, characterized in that said first and second damage preventing means (72a, 72b) are integral with the first and second holding members (71a, 71b) and are constituted by upper surfaces of the first and second holding members (71a, 71b).

6. The tape-loading mechanism according to claim 5, characterized in that said first and second damage preventing means (72a, 72b) include tape guide portions, located at a position away from the guide rollers (41a, 41b) by a predetermined distance, for guiding slack of the tape.

7. The tape-loading mechanism according to claim 6, characterized in that said tape guide portions include projections (75a, 75b) for guiding the slack of the tape, said projections being formed at those ends of the first and second damage preventing means (72a, 72b) which are located opposite to the guide rollers (41a, 41b).

8. The tape-loading mechanism according to claim 6, characterized in that said tape guide portions include slanted portions (76a, 76b) for guiding the slack of the tape, said slanted portions being formed at those ends of the first and second damage preventing means (72a, 72b) which are located opposite to the guide rollers (41a, 41b).

## Patentansprüche

1. Bandlademechanismus zum Ausziehen eines Magnet-Bands (T) aus einer Bandkassette (C) und Inberührungbringen des Bands (T) mit einer Trommel (37) für Aufzeichnung/Wiedergabe von Information auf dem bzw. vom Band (T), wobei der Mechanismus umfaßt:
ein an einer Bandeinlaufseite der Trommel (37) vorgesehenes und einen ersten Schrägzapfen (40a) sowie eine erste Führungsrolle (41a) daran aufweisendes erstes Bandausziehelement (39a) zum Ausziehen des Bands (T) aus der Bandkassette (C), wobei der erste Schrägzapfen (40a) und die erste Führungsrolle (41a) mit dem Band (T) in Berührung gelangen, die erste Führungsrolle (41a) einen ersten Bandwickelabschnitt (73a) aufweist und das Band (T) um den ersten Bandwickelabschnitt (73a) herumläuft, wenn das Band (T) mit der ersten Führungsrolle (41a) in Berührung steht,
eine an der Bandeinlaufseite der Trommel (37) vorgesehene erste Führungseinheit (38a) zum Führen des ersten Bandausziehelements (39a) zwischen ersten und zweiten Positionen, wobei der erste Schrägzapfen (40a) und die erste Führungsrolle (41a) des ersten Bandausziehelements (39a) in der ersten Position anfänglich das in der Bandkassette (C) enthaltene Band (T) kontaktieren und das erste Bandausziehelement (39a) das aus der Bandkassette (C) ausgezogene Band (T) in der Zweiten Position mit der Trommel (37) in Berührung bringt,
ein erstes Halteelement (71a), um das durch die erste Führungseinheit (38a) aus der ersten Position geführte erste Bandausziehelement (39a) in der zweiten Position zu halten,
ein an einer Bandauslaufseite der Trommel (37) vorgesehenes und einen zweiten Schrägzapfen (40b) sowie eine zweite Führungsrolle (41b) daran aufweisendes zweites Bandausziehelement (39b) zum Ausziehen des Bands (T) aus der Bandkassette (C), wobei der zweite Schrägzapfen (40b) und die zweite Führungsrolle (41b) mit dem Band (T) in Berührung gelangen, die zweite Führungsrolle (41b) einen zweiten Bandwickelabschnitt (73b) aufweist und das Band (T) um den zweiten Bandwickelabschnitt (73b) herumläuft, wenn das Band (T) mit der zweiten Führungsrolle (41b) in Berührung steht,
eine an der Bandauslaufseite der Trommel (37) vorgesehene zweite Führungseinheit (38b) zum Führen des zweiten Bandausziehelements (39b) zwischen dritten und vierten Positionen, wobei der zweite Schrägzapfen (40b) und die zweite Führungsrolle (41b) des zweiten Bandausziehelements (39b) in der dritten Position anfänglich das in der Bandkassette (C) enthaltene Band (T) kontaktieren und das zweite Bandausziehelement (39b) das aus der Bandkassette (C) ausgezogene Band (T) in der vierten Position mit der Trommel (37) in Berührung bringt, und
ein zweites Halteelement (71b), um das durch die zweite Führungseinheit (38b) aus der dritten Position geführte Bandausziehelement (39b) in der vierten Position zu halten, ferner gekennzeichnet durch eine erste Beschädigungsschutzeinheit (72a), die am ersten Halteelement (71a) so (an)geformt ist, daß sie relativ zu mindestens einer von Bandeinlauf- und- auslaufseiten der ersten Führungsrolle (41a) des ersten Bandausziehelements (39a) positioniert ist, um eine Beschädigung des Bands (T) zu verhindern, wenn das Band (T) in einem ungestrafften Zustand von der ersten Führungsrolle (41a) herabfällt, wobei die erste Beschädigungsschutzeinheit (72a) nur eine Unterkante des Bands (T) in einer Höhenlage entsprechend einem unteren Ende des ersten Bandwickelabschnitts (73a) der ersten Führungsrolle (41a) unterstützt und die andere(n) Kante und Flächen des Bands (T) unterstützungsfrei läßt, so daß dann, wenn das Band (T) in einem ungestrafften Zustand die erste Führungsrolle (41a) verläßt (von ihr abläuft), die Unterkante des ungestrafften Bands (T) auf der ersten Beschädigungsschutzeinheit (72a) aufliegt, und
eine zweite Beschädigungsschutzeinheit (72b), die am zweiten Halteelement (71b) so (an)geformt ist, daß sie relativ zu mindestens einer der Bandeinlauf- und -auslaufseiten der zweiten Führungsrolle (41b) des zweiten Bandausziehelements (39b) angeordnet ist, um eine Beschädigung des Bands (T) zu verhindern, wenn das Band (T) in einem ungestrafften Zustand von der zweiten Führungsrolle (41b) herabfällt, wobei die zweite Beschädigungsschutzeinheit (72b) nur die Unterkante des Bands (T) in einer Höhenlage entsprechend einem unteren Ende des zweiten Bandwickelabschnitts (73b) der zweiten Führungsrolle (41b) unterstützt und die andere(n) Kante und Flächen des Bands (T) unterstützungsfrei läßt, so daß dann, wenn das Band (T) in einem ungestrafften Zustand die zweite Führungsrolle (41b) verläßt (von ihr abläuft), die Unterkante des ungestrafften Bands (T) auf der zweiten Beschädigungsschutzeinheit (72b) aufliegt.

2. Bandlademechanismus nach Anspruch 1, dadurch gekennzeichnet, daß
die Führungsrollen (41a, 41b) Flansche (74a, 74b) aufweisen, die untere Enden der Bandwickelabschnitte (73a, 73b) festlegen, und
die ersten und zweiten Beschädigungsschutzeinheiten (72a, 72b) im wesentlichen auf der gleichen Höhe wie die Flansche (74a, 74b) liegen.

3. Bandlademechanismus nach Anspruch 1, dadurch gekennzeichnet, daß
die Führungsrollen (41a, 41b) Flansche (74a, 74b) aufweisen, die untere Enden der Bandwickelabschnitte (73a, 73b) festlegen, und
die ersten und zweiten Beschädigungsschutzeinheiten (72a, 72b) in einer geringfügig tieferen Höhe als die Flansche (74a, 74b) liegen.

4. Bandlademechanismus nach einem der Ansprüche 1 bis 3, dadurch gekennzeichnet, daß die ersten und zweiten Beschädigungsschutzeinheiten (72a, 72b) sich mit ihren Vorderenden so erstrecken, daß sie eine Bandverlaufsbahn schneiden.

5. Bandlademechanismus nach einem der Ansprüche 1 bis 3, dadurch gekennzeichnet, daß die ersten und zweiten Beschädigungsschutzeinheiten (72a, 72b) mit den ersten und zweiten Halteelementen (71a, 71b) materialeinheitlich (ausgebildet) und durch Oberseiten der ersten und zweiten Halteelemente (71a, 71b) gebildet sind.

6. Bandlademechanismus nach Anspruch 5, dadurch gekennzeichnet, daß die ersten und zweiten Beschädigungsschutzeinheiten (72a, 72b) in einer von den Führungsrollen (41a, 41b) in einem vorbestimmten Abstand gelegenen Position angeordnete Bandführungsabschnitte zum Führen eines Durchhangs des Bands aufweisen.

7. Bandlademechanismus nach Anspruch 6, dadurch gekennzeichnet, daß die Bandführungsabschnitte Vorsprünge (75a, 75b) zum Führen des Durchhangs des Bands aufweisen, welche Vorsprünge an den Enden der ersten und zweiten Beschädigungsschutzeinheiten (72a, 72b) angeformt sind, welche den Führungsrollen (41a, 41b) gegenüberliegend (davon abgewandt) angeordnet sind.

8. Bandlademechanismus nach Anspruch 6, dadurch gekennzeichnet, daß die Bandführungsabschnitte schräge Abschnitte (76a, 76b) zum Führen des Durchhangs des Bands umfassen, welche schrägen Abschnitte an den Enden der ersten und zweiten Beschädigungsschutzeinheiten (72a, 72b) angeformt sind, welche den Führungsrollen (41a, 41b) gegenüberliegend (davon abgewandt) angeordnet sind.

## Revendications

1. Mécanisme de chargement de bande pour extraire une bande (T) d'une cassette de bande (C) et pour amener la bande (T) en contact avec un tambour (37) utilisé pour l'enregistrement/reproduction d'information sur la bande (T) le mécanisme comprenant :
un premier élément d'extraction de bande (39a), disposé du côté entrée de bande du tambour (37) et portant une première tige oblique (40a) et un premier galet de guidage (41a), pour extraire la bande (T) de la cassette de bande (C), la première tige oblique (40a) et le premier galet de guidage (41a) contactant la bande (T), le premier galet de guidage (41a) comprenant une première partie d'enroulement de bande (73a), la bande (T) passant autour de la première partie d'enroulement de bande (73a) lorsque la bande (T) contacte le premier galet de guidage (41a) ;
un premier moyen de guidage (38a), disposé du côté entrée de bande du tambour (37), pour guider le premier élément d'extraction de bande (39a) entre des première et seconde positions, la première tige oblique (40a) et le premier galet de guidage (41a) du premier élément d'extraction de bande (39a) contactant initialement la bande (T) contenue dans la cassette de bande (C) au droit de la première position, et le premier élément d'extraction de bande (39a) amenant la bande (T) extraite de la cassette de bande (C) en contact avec le tambour (37) au droit de la seconde position ;
un premier élément de maintien (71a) pour maintenir, au droit de la seconde position, le premier élément d'extraction de bande (39a) guidé depuis la première position par le premier moyen de guidage (38a) ;
un second élément d'extraction de bande (39b), disposé du côté sortie de bande du tambour (37) et portant une seconde tige oblique (40b) et un second galet de guidage (41b), pour extraire la bande (T) de la cassette de bande (C), la seconde tige oblique (40b) et le second galet de guidage (41b) contactant la bande (T), le second galet de guidage (41b) comprenant une seconde partie d'enroulement de bande (73b), la bande (T) passant autour de la seconde partie d'enroulement de bande (73b) lorsque la bande (T) contacte le second galet de guidage (41b) ;
un second moyen de guidage (38b), disposé du côté sortie de bande du tambour (37), pour guider le second élément d'extraction de bande (39b) entre des troisième et quatrième positions, la seconde tige oblique (40b) et le second galet de guidage (41b) du second élément d'extraction de bande (39b) contactant initialement la bande (T) contenue dans la cassette de bande (C) au droit de la troisième position, et le second élément d'extraction de bande (39b) amenant la bande (T) extraite de la cassette de bande (C) en contact avec le tambour (37) au droit de la quatrième position ;
un second élément de maintien (71b) pour maintenir, au droit de la quatrième position, le second élément d'extraction de bande (39b) guidé depuis la troisième position par le second moyen de guidage (38b) ;
caractérisé en ce qu'il comprend en outre :
un premier moyen de prévention de dommages (72a), formé sur le premier élément de maintien (71a) de telle manière que le premier moyen de prévention de dommages (72a) soit placé, par rapport à au moins l'un d'un côté entrée de bande et d'un côté sortie de bande du premier galet de guidage (41a) du premier élément d'extraction de bande (39a), pour empêcher la bande (T) d'être endommagée lorsque la bande (T) tombe du premier galet de guidage (41a) dans un état détendu, le premier moyen de prévention de dommages (72a) supportant seulement le bord inférieur de la bande (T) à un niveau correspondant à l'extrémité inférieure de la première partie d'enroulement de bande (73a) du premier galet de guidage (41a), en laissant non supportés l'autre bord et les faces de la bande (T), de sorte que s'il arrive que la bande (T) dans un état détendu quitte le premier de galet de guidage (41a), le bord inférieur de la bande détendue (T) reposera sur le premier moyen de prévention de dommages (72a) ; et
un second moyen de prévention de dommages (72b), formé sur le second élément de maintien (71b) de telle manière que le second moyen de prévention de dommages (72b) soit placé, par rapport à au moins l'un d'un côté entrée de bande et d'un côté sortie de bande du second galet de guidage (41b) du second élément d'extraction de bande (39b), pour empêcher la bande (T) d'être endommagée lorsque la bande (T) tombe du second galet de guidage (41b) dans un état détendu, le second moyen de prévention de dommages (72b) supportant seulement le bord inférieur de la bande (T) à un niveau correspondant à l'extrémité inférieure de la seconde partie d'enroulement de bande (73b) du second galet de guidage (41b), en laissant non supportés l'autre bord et les faces de la bande (T), de sorte que s'il arrive que la bande (T) dans un état détendu quitte le second de galet de guidage (41b), le bord inférieur de la bande détendue (T) reposera sur le second moyen de prévention de dommages (72b).

2. Mécanisme de chargement de bande selon la revendication 1, caractérisé en ce que :
lesdits galets de guidage (41a, 41b) comprennent des collerettes (74a, 74b) qui définissent des extrémités inférieures des parties d'enroulement de bande (73a, 73b) ; et,
en ce que lesdits premier et second moyens de prévention de dommages (72a, 72b) sont sensiblement au même niveau que les collerettes (74a, 74b).

3. Mécanisme de chargement de bande selon la revendication 1, caractérisé en ce que :
lesdits galets de guidage (41a, 41b) comprennent des collerettes (74a, 74b) qui définissent des extrémités inférieures des parties d'enroulement de bande (73a, 73b) ; et,
en ce que lesdits premier et second moyens de prévention de dommages (72a, 72b) sont à un niveau légèrement plus bas que celui des collerettes (74a, 74b).

4. Mécanisme de chargement de bande selon l'une quelconque des revendications 1 à 3, caractérisé en ce que lesdits premier et second moyens de prévention de dommages (72a, 72b) ont des extrémités qui s'étendent de manière à croiser le trajet de bande.

5. Mécanisme de chargement de bande selon l'une quelconque des revendications 1 à 3, caractérisé en ce que lesdits premier et second moyens de prévention de dommages (72a, 72b) sont d'un seul tenant avec les premier et second éléments de maintien (71a, 71b) et sont constitués par les surfaces supérieures des premier et second éléments de maintien (71a, 71b).

6. Mécanisme de chargement de bande selon la revendication 5, caractérisé en ce que lesdits premier et second moyens de prévention de dommages (72a, 72b) comprennent des parties de guidage de bande, situées à une distance prédéterminée des galets de guidage (41a, 41b), pour guider le mou de la bande.

7. Mécanisme de chargement de bande selon la revendication 6, caractérisé en ce que lesdites parties de guidage de bande comprennent des saillies (75a, 75b) pour guider le mou de la bande, lesdites saillies étant formées aux extrémités des premier et second moyens de prévention de dommages (72a, 72b) qui sont situées à l'opposé des galets de guidage (41a, 41b).

8. Mécanisme de chargement de bande selon la revendication 6, caractérisé en ce que lesdites parties de guidage de bande comprennent des parties obliques (76a, 76b) pour guider le mou de la bande, lesdites parties obliques étant formées aux extrémités des premier et second moyens de prévention de dommages (72a, 72b) qui sont situées à l'opposé des galets de guidage (41a, 41b).
